# EUROPEAN PATENT APPLICATION

(11) **EP 2 444 302 A2**
(43) Date of publication of application: **25.04.2012**
(21) Application number: 11186004.5
(22) Date of filing: 20.10.2011
(51) Int. Cl.: B62D 15/02

(54) **Parking assistance apparatus and parking method**

(30) Priority: 21.10.2010 GB 1017763
(71) Applicant: Nissan Motor Manufacturing (UK) Ltd., Cranfield Bedfordshire MK43 0DB (GB)
(72) Inventor: Church, Chris, Cranfield, Bedfordshire MK430DB (GB); Linchyk, Alexandra, Cranfield, Bedfordshire MK430DB (GB)

(57) **Abstract**

A parking assistance apparatus for a vehicle (1) includes processing means (15) arranged to: determine the size of a parking space according to inputs received from sensing means (11); determine a pathway along which the vehicle is to be moved, to position the vehicle within the parking space so that the vehicle is laterally and / or longitudinally offset within the parking space; and to generate control signals for a vehicle steering device (3) to guide the vehicle along said pathway. Driver controls (140, Fig. 5b) allow desired offset(s) to be programmed, optionally as a percentage of the available offsets; and for the desired offset(s) to be committed to memory, optionally for more than one regular vehicle user. One or more vehicle door mirror(s) (61) may be folded in automatically as required. A method for parking a vehicle (1) is also described.

## Description

The present invention relates to a parking assistance apparatus; to a method for parking a vehicle; and to a vehicle.

Parking assistance systems are known for assisting a driver to reverse a vehicle into a parking space. In use, the driver drives past a potential parking space; and sensors mounted on the side of the vehicle scan the area in order to determine whether the parking space is sufficiently large to accommodate the vehicle. If the parking space is sufficiently large, the system instructs the driver to stop the vehicle. The apparatus calculates a trajectory along which the vehicle must be manoeuvred in order to position the car centrally within a parking space, and controls operation of the powered steering in order to manoeuvre the vehicle into the parking space.

In some circumstances, the available parking space can be narrow and can be defined on either side by objects such as cars, walls, kerbs, etc. For persons having limited mobility, getting into and out of a parked vehicle can be difficult since there is often not sufficient space between the vehicle and the adjacent objects in order to fully open the vehicle door. This is a particular problem for disabled persons, for example those persons who access the vehicle from a wheelchair. It is also a problem for elderly persons who have reduced mobility.

Good access to the vehicle is also required when it is necessary to load articles into, or remove articles from, a vehicle. In these circumstances, additional space may be required in order to open the vehicle door sufficiently wide to remove - for example - a bulky article. Similarly it is often desirable to have good access to the vehicle's boot (trunk) in order to load and remove goods therefrom; or to the bonnet (hood) to perform maintenance.

Some prior art parking assistance systems allow adjustment of the desired parking position from side to side and / or fore and aft (laterally and longitudinally), but require this input to be made for each parking space used. The parking offset required may be shown on driver operated controls or displays as bars or steps, which may not give a clear message to the driver. Furthermore, the parking offset input may have to be made by repeated operation of driver controls. This will inevitably cause delay in parking, which may annoy other motorists who are being held up by the vehicle which is being programmed to park itself. Furthermore, different users of the same vehicle may have different parking preferences, which have to be programmed in each time the vehicle is parked.

Known parking assistance systems are not programmed to address these problems.

Accordingly, the present invention seeks to mitigate at least one of the aforementioned problems.

According to one aspect of the invention there is provided a parking assistance apparatus for a vehicle. The apparatus includes processing means that is arranged to: determine the size of a parking space according to inputs received from sensing means; determine a pathway along which the vehicle is to be moved in order to position the vehicle within the parking space such that the vehicle is laterally and / or longitudinally offset within the parking space; and to generate control signals for a vehicle steering device to guide the vehicle along the pathway to the offset position; and further including a user interface having input means enabling a user to make offset position selections; characterized in that: the input means enables the user to input a value that represents the extent to which the vehicle is offset from a central longitudinal axis of the parking space and / or a central lateral axis of the parking space.

Thus the invention, in use, controls the vehicle steering device to position the vehicle in the parking space such that a central longitudinal axis of the vehicle is offset in the lateral direction from a central longitudinal axis of the parking space and / or a central lateral axis of the vehicle is offset in the longitudinal direction from a central lateral axis of the parking space. For a parking space having first and second longitudinal sides and first and second lateral sides, the vehicle is positioned closer to one of the first and second longitudinal sides than the other of the first and second longitudinal sides, when laterally offset, and is positioned closer to one of the first and second lateral sides than the other of the first and second lateral sides, when longitudinally offset. The first and second longitudinal sides, and the first and second lateral sides, of the parking space can be defined, for example by any combination of the following potential adjacent objects: parked cars, walls, kerbs, and marked boundaries on the driving surface such as white lines. This is a non-exhaustive list.

The invention is particularly useful when a parking space is bounded on two sides by objects that restrict opening of the vehicle doors, boot and / or bonnet, for example between two vehicles, between one vehicle and a static object such as a wall, or between two static objects such as the walls of a single car garage. The invention provides easier access to the vehicle on the side with the larger space, for example to enable a person to get into, and out of, the vehicle more easily, and / or to allow goods to be loaded into, and removed from, the vehicle more easily. The invention has particular utility for assisting persons with limited mobility to more easily access the vehicle, for example disabled or elderly persons.

In an example, the value that represents the extent to which the vehicle is offset from the central longitudinal axis of the parking space and / or the central lateral axis of the parking space is expressed as a percentage of the available offset, from alignment with a central axis of the parking space to maximum available offset.

In an example, alignment with a central axis is expressed as zero percent, and maximum available offset is expressed as plus one hundred percent in one direction, and minus one hundred percent in an opposite direction.

In an example, the user interface input means is arranged to adjust offset in discrete steps of at least ten per cent. This allows quick data entry, saving time and fuel.

In a further example, the processing means stores, and/or displays through the user interface, a rule that an offset within a specified range should only be used when parking the vehicle against static objects. The specified range may be plus or minus 80 to 100 percent. (that is, 80 to 100 percent of available offset in one direction or the other)

In an example, the processing means is arranged to position the vehicle in a first operational mode, such that the driver side of the vehicle is positioned closer to the central longitudinal axis of the parking space than the passenger side of the vehicle. Advantageously the processing means is arranged to position the vehicle in a second operational mode, such that the passenger side of the vehicle is positioned closer to the central longitudinal axis of the parking space than the driver side of the vehicle. For example, when parking in a garage, the apparatus can park the vehicle more closely to the passenger side wall to enable the driver door to be opened more widely.

In an example, the processing means is arranged to position the vehicle in a third operational mode, such that the front end of the vehicle is positioned closer to a central lateral axis of the parking space than the rear end of the vehicle. Advantageously the processing means is arranged to position the vehicle in a fourth operational mode, such that the rear end of the vehicle is positioned closer to the central lateral axis of the parking space than the front end of the vehicle. For example, when parallel parking between two vehicles, the front or rear end of the car can be parked further away from the adjacent vehicle to provide more space to access the bonnet or boot respectively. Typically the front end of the vehicle is defined by a front bumper and the rear end of the vehicle is defined by a rear bumper.

In an example, the user interface can include at least one of the following: a switch, slide, key and/or a touch sensitive input device such as a touch sensitive screen or keypad.

In an example, the input means can be arranged to enable a user to select from operational modes that include at least one of the first, second, third and fourth operational modes. Advantageously the input means enables the user to select any one of the first and second operational modes in combination with any one of the third and fourth operational modes. This enables the vehicle to be parked such that better access is provided to one side of the vehicle (the passenger side or driver side) and to one end of the vehicle (the front or rear end). For example, the vehicle can be positioned to enable more room for the driver to get out of the vehicle and to provide more room at the rear of the vehicle so that the driver can more easily unload goods from the boot.

In an example, the processing means comprises a memory, and said user interface input means is arranged to store at least one predetermined offset position in said memory; and said processing means is programmed to position the vehicle at a predetermined offset position which is retrieved from said memory.

In an example, the input means can be arranged to enable the user to select a default operating mode. This enables the user to select at least one of the first, second, third and fourth offset modes as the default selection. This is particularly useful for persons having limited mobility when one of the offset modes is required regularly.

In an example, at least one said predetermined offset position or default operating mode is a personalized offset position or default operating mode stored in said memory. This can save time and frustration when several drivers use the same vehicle.

In an example, the input means can be arranged to enable the user to select the extent to which the vehicle is offset from the central longitudinal axis of the parking space and / or the central lateral axis of the parking space. This provides the user with greater control as to how the vehicle is positioned within the parking space.

The input means can include a scale representing the extent to which the vehicle is laterally offset from the central longitudinal axis of the parking space. The input means includes an indicator that is movable along the scale in order to select the extent to which the central longitudinal axis of the vehicle is laterally offset from the central longitudinal axis of the parking space.

The input means can include a scale representing the extent to which the vehicle is longitudinally offset from the central lateral axis of the parking space. The input means can include an indicator that is movable along the scale in order to select the extent to which the central lateral axis of the vehicle is longitudinally offset from the central lateral axis of the parking space. This provides a fast input means for the user.

In each case, the scale and indicator can be provided by, for example, graphics on a touch sensitive display screen; or by an electro-mechanical slideable control having appropriate markings. The scale can represent the percentage of offset required, for example 0% can correspond to a central position, +100% can correspond to the maximum permissible offset in a first direction and -100% can correspond to the maximum permissible offset in a second direction. The scale is typically arranged in a rectilinear fashion; however, any suitable arrangement can be used, such as a curvilinear scale.

The input means can include "+ve" (positive) and "-ve" (negative) buttons to enable the user to increase and decrease respectively the extent of offset required. The "+ve" and "-ve" buttons can be provided on a touch sensitive display as graphics icons.

The input means can include at least one rotatable control that can be rotated to set the extent of offset required. For example, the input means can include a first dial for the lateral offset function and a second dial for the longitudinal offset function. Rotatable controls provide fast input means.

The input means can be arranged to enable the user to input a value that represents the extent to which the vehicle is offset from the central longitudinal axis of the parking space and / or the central lateral axis of the parking space. For example, the user can input a value via a keypad or via a touch sensitive display.

The interface can be arranged to enable the user to select between predetermined lateral offset settings, for example, the user can select between high, medium and low offset settings. This provides limited selection to speed up the parking process.

The user interface can be arranged such that the user is required to select the type of offset parking required each time a parking manoeuvre is requested.

The input means can be arranged to enable the user to activate and deactivate the offset function. When the offset function is deactivated, the parking assistance apparatus functions in a conventional manner and positions the vehicle substantially centrally within the parking space. The parking assistance apparatus can be arranged to operate in the conventional manner unless the user selects an offset mode for the parking manoeuvre.

In an example, the processing means can be programmed to position the vehicle at a predetermined offset position. This simplifies the programming for the processing means and eliminates the user input, thereby providing fast parking manoeuvres.

In an example, the processing means can be arranged to position the vehicle such that the central longitudinal axis of the vehicle is substantially parallel with the central longitudinal axis of the parking space and / or to position the vehicle such that the central lateral axis of the vehicle is substantially parallel with the central lateral axis of the parking space.

In an example, the type of parking manoeuvre is determined by the processing means according to the size of the parking space, and its orientation relative to the vehicle. The processing means obtains width and depth dimensional data from the sensors and determines the type of manoeuvre required. The processing means typically selects from the following parking manoeuvres: parallel parking; reverse parking such that the vehicle is substantially perpendicular to the road, and reverse parking such that the vehicle is angled to the road.

In a preferred embodiment, the vehicle braking and acceleration are controlled by the driver during a parking manoeuvre. However, the invention is applicable to parking assistance systems that take full control of the vehicle during a parking manoeuvre.

In an example, the sensing means includes at least one ultrasonic, infrared, and/or optical sensor.

According to another aspect of the invention, there is provided a method for parking a vehicle, the method including providing processing means, using the processing means to determine the size of a parking space according to readings obtained from sensing means; using the processing means to determine a pathway along which the vehicle is to be moved in order to position the vehicle within the parking space in a position such that a central longitudinal axis of the vehicle is laterally offset from a central longitudinal axis of the parking space and / or a central lateral axis of the vehicle is longitudinally offset from a central lateral axis of the parking space; and using the processing means to control operation of a steering device to manoeuvre the vehicle along the pathway to the longitudinally and / or laterally offset position; wherein a user interface is provided for the processing means, said interface having input means that is arranged to enable a user to make offset position selections; characterized in that: the input means enables the user to select the extent to which the central longitudinal axis of the vehicle is laterally offset from the central longitudinal axis of the parking space and / or the central lateral axis of the vehicle is longitudinally offset from the central lateral axis of the parking space.

In an example, the processing means is programmed to position the vehicle at a predetermined offset position.

The vehicle includes a driver side and a passenger side and the method can include positioning the vehicle such that the driver side of the vehicle is positioned closer to the central longitudinal axis of the parking space than the passenger side of the vehicle. Furthermore, the method can include positioning the vehicle such that the passenger side of the vehicle is positioned closer to the central longitudinal axis of the parking space than the driver side of the vehicle.

The vehicle includes a front end and a rear end and the method can include positioning the vehicle such that the front end of the vehicle is positioned closer to a central lateral axis of the parking space than the rear end of the vehicle. Furthermore, the method can include positioning the vehicle such that the rear end of the vehicle is positioned closer to the central lateral axis of the parking space than the front end of the vehicle.

The method can include providing a user interface having input means that is arranged to enable a user to make offset position selections. The input means enables the user to select the offset position of the vehicle.

The input means can enable the user to select the extent to which the vehicle is laterally offset from the central longitudinal axis of the parking space and / or longitudinally offset from the central lateral axis of the parking space.

The processing means can be programmed to position the vehicle at a predetermined offset position.

The processing means can be arranged to position the vehicle such that the central longitudinal axis of the vehicle is substantially parallel with the central longitudinal axis of the parking space and / or the central lateral axis of the vehicle is substantially parallel to the central lateral axis of the parking space.

According to another aspect, there is provided a vehicle including an apparatus according to any configuration described herein, or arranged to perform a method according to any combination of steps described herein. The apparatus is mounted onboard the vehicle, and may be connected to a vehicle CANbus. The apparatus may receive data from, and transmit data to, the CANbus.

In an example, the vehicle includes pivotable side mirrors (also known as door mirrors and wing mirrors), and driving means arranged to move the pivotable side mirrors from an open position to a closed position, and from a closed position to an open position, wherein the processing means is arranged to operate the driving means to automatically move at least one of the side mirrors to a closed position when performing the parking manoeuvre. Advantageously, each of the side mirrors is individually moveable; and the processing means is arranged to actuate each side mirror independently. The processing means closes at least the side mirror that is on the offset side of the vehicle, that is, the side of the vehicle that will be parked closer to the edge of the parking space. The side mirror is closed prior to the vehicle moving into the parking space. This prevents the side mirror from colliding with an adjacent vehicle or barrier. Preferably, the opposite side mirror is maintained in the open position so that it can be used by the driver during the parking manoeuvre. However, the processing means can be arranged to move both of the side mirrors to a closed position during a parking manoeuvre.

An embodiment of the invention will now be described, by way of example only, with reference to the accompanying drawings, in which:

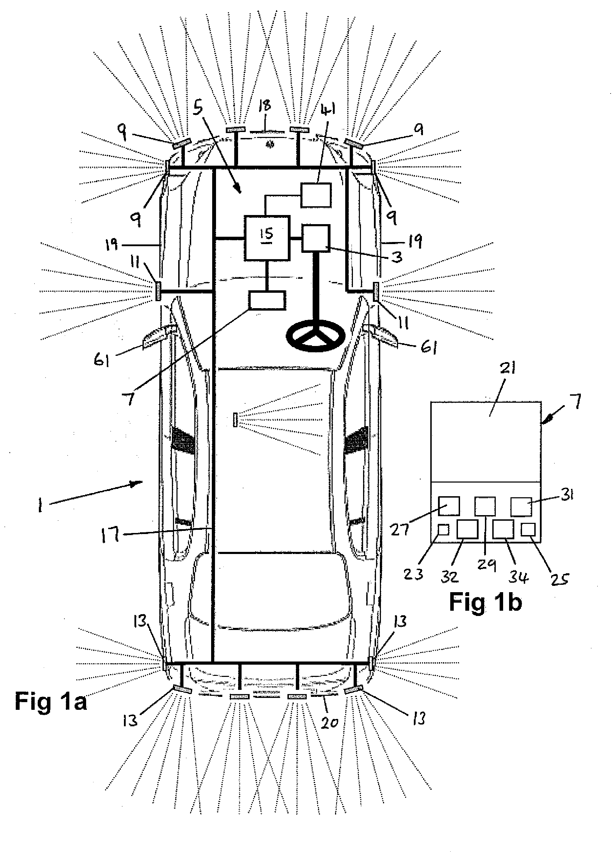

Figure 1 a is a schematic view of a first embodiment of the invention;
Figure 1 b is a schematic view of an interface for making user selections;
Figure 2 is a flow diagram of a parking method;
Figure 3 illustrates the movement of a vehicle into a conventional, perpendicular to kerb parking space when undertaking the method shown in Figure 2;
Figure 4 illustrates the movement of a vehicle into an angled-to-kerb parking space when undertaking the method shown in Figure 2;
Figure 5a shows an alternative interface for making user selections, said alternative interface including a touch sensitive screen;
Figure 5b shows an enlarged view of a first input mode for the user interface of Figure 5a, which enables a user to select the extent of lateral offset positioning required;
Figure 6a shows the position of the vehicle when positioned centrally within a parking space after having performed a parallel parking manoeuvre;
Figure 6b shows the position of the vehicle when it is positioned longitudinally offset from a lateral axis of the parking space after having performed a parallel parking manoeuvre; and
Figure 7 shows an enlarged view of a second input mode for the user interface of Figure 5a, which enables a user to select the extent of longitudinal offset positioning required.

Figure 1 shows a car 1 including an electric power steering device 3, and a parking assistance device or apparatus 5; which includes a driver interface 7, front sensors 9, side sensors 11, and rear sensors 13. The sensors 9, 11, 13 are connected to a processing device 15 via a high speed CANbus 17.

The driver interface 7 includes a display 21, a speaker 23, an on/off switch 25, a passenger side offset switch 27, a central positioning switch 29, a driver side offset switch 31, a forward offset switch 32 and a reverse offset switch 34. The switches enable the user to choose which type of offset parking manoeuvre is to be performed.

The front and rear sensors 9, 13 are located in apertures formed in the front and rear bumpers 18, 20 respectively. The front and rear sensors 9, 13 are proximity sensors for detecting nearby objects at a low level. The sensors are typically ultrasonic sensors that are arranged to measure the time taken for each sound pulse to be reflected back to the receiver. The processing device 15 receives inputs from the front and rear sensors 9, 13 via the CANbus 17. The processing device 15 determines the distance to the nearby objects and provides feedback to the driver, which indicates the distance between the car 1 and the object. The processor device 15 sends signals to the speaker 23 to provide audible feedback, typically in the form of a series of beeps and/or tones, which increase in frequency as the distance between the car 1 and the object decreases. A continuous tone is emitted when the distance between the car 1 and the object is less than a predetermined minimum. Optionally, the processing device 15 can provide distance feedback via the display 21.

The front and rear sensors 9, 13 include at least one sensor 9, 13 located at each corner of the car to improve the accuracy of detection around those parts of the car 1, and to improve the accuracy of the parking manoeuvre.

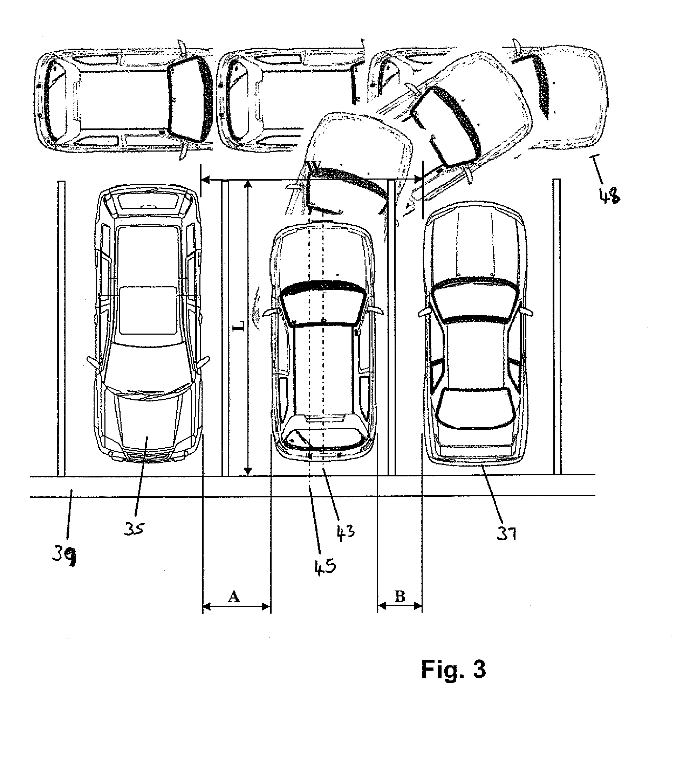

The side sensors 11 are mounted in front wings 19 of the car. The side sensors 11 are ultrasonic sensors that are arranged to measure the time taken for each sound pulse to be reflected back to their receivers from adjacent objects that define the parking space. For example, the side sensors 11 can detect adjacent vehicles, walls, fences, barriers, kerbs and/or white lines on the road surface. The side sensors 11 take readings of the parking space as the car 1 drives past the parking space (see Figure 3). Readings from the side sensors 11 and from a vehicle speed sensor 41 are communicated to the processing device 15 via the CANbus 17. The processing device 15 determines the size of the parking space available from the signals received from the side sensors 11 and speed sensor 41.

The processing device 15 determines whether a regular reversing manoeuvre, an angled parking manoeuvre, or a parallel parking manoeuvre is required according to the signals received from the side and speed sensors 11, 41.

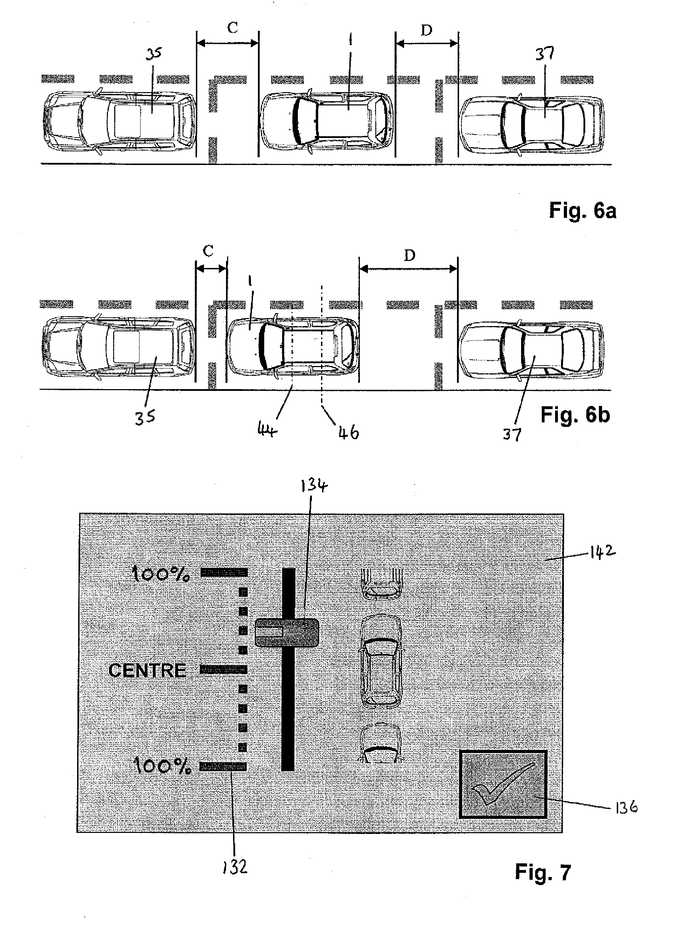

In Figure 3, the parking space is bounded by first and second adjacent vehicles 35, 37 and a kerb 39. The distance between the first and second vehicles 35, 37 defines the width W of the parking space and the position of the kerb 39 defines the length L of the parking space. The parking space has a longitudinal mid-line 45, which is arranged substantially perpendicular to the road 48 for a regular reverse manoeuvre, and a lateral mid-line (not shown) that is arranged substantially perpendicular to the longitudinal mid-line. The longitudinal mid-line is arranged substantially parallel to the road 48 when a parallel parking situation arises, and the lateral mid-line 46 (see Figure 6b) is arranged substantially perpendicular thereto.

The side sensors 11 on both sides of the car 1 operate simultaneously. The driver indicates to the parking assistance device 5 which side of the road he wants to park the vehicle on by actuating an indicator switch or by making an input via the driver interface 7.

The processing device 15 determines a pathway along which the car 1 is to be moved to position the car in the parking space from the data relating to the size and orientation of the parking space, and a known start position. The processing device 15 generates control signals for the electric power steering device 3 to steer the vehicle along the predetermined pathway to the parking position selected by the user. The driver is able to select from passenger side and driver side lateral offset positions, a central position, and forward and reverse longitudinal offset positions according to at least one input made via the switches 27, 29, 31, 32, 34. When a lateral offset position is selected (passenger side or driver side), the processing device 15 calculates the pathway along which the vehicle is to be moved such that, in its parked position, the longitudinal mid-line 43 of the car 1 is laterally offset from the longitudinal mid-line 45 of the parking space (see Figure 3). The effect of this is that the distance A between the car 1 and the first vehicle 35 is different from the distance B between the car 1 and the second vehicle 37. Thus the car 1 is non-centrally positioned along the width dimension of the parking space. The car 1 is positioned closer to the first vehicle 35 when the passenger side offset switch 27 is selected (for a right hand drive car), and is positioned closer to the second vehicle 37 when the driver side offset switch 31 is selected (for a right hand drive car). Thus the driver is able to select a parking position that provides a greater amount of space on either the passenger or driver side of the vehicle, for each parking manoeuvre, in order to improve access to that side of the vehicle.

Typically, the processing device 15 positions the car 1 within the parking space such that the longitudinal mid-line of the car 43 is arranged substantially parallel to the longitudinal mid-line of the parking space 45.

When a longitudinal offset position is selected (forward or reverse), the processing device 15 calculates the pathway along which the vehicle is to be moved such that, in its parked position, the transverse mid-line of the car 44 is longitudinally offset from the transverse mid-line 46 of the parking space (see Figure 6b). The effect of this is that the distance C between the car 1 and the first vehicle 35 is different from the distance D between the car 1 and the second vehicle 37. Thus the car 1 is non-centrally positioned along the length dimension of the parking space. This compares with the conventional central positioning, wherein the distance C between the car 1 and the first vehicle 35 is equal to the distance D between the car 1 and the second vehicle 37 (see Figure 6a).

The car 1 is positioned closer to the first vehicle 35 when the forward offset switch 32 is selected, and is positioned closer to the second vehicle 37 when the reverse offset switch 34 is selected. Thus the driver is able to select a parking position that provides a greater amount of space either to the front of the car, for example to provide better access to the bonnet, or to the rear of the car to provide better access to the boot.

Typically, the processing device 15 positions the car 1 within the parking space such that the lateral mid-line of the car 44 is arranged substantially parallel to the lateral mid-line 46 of the parking space.

Optionally, the vehicle can include motorised side mirrors 61 (Figure 1). The processing device 15 is arranged to control operation of the side mirrors 61 during a parking manoeuvre. The side mirrors are individually controllable by the processing device 15. The processing device 15 is programmed to fold in the side mirror on the side of the vehicle that is parked closest to the adjacent object, to protect it from damage, while leaving the other side mirror in the normal operating position. This has the advantage that the non-closed mirror is usable by the driver when parking. Optionally, the processing device 15 can be programmed to fold in both mirrors during each parking manoeuvre. Optionally, the interface 7 can include a control to enable the driver to select between a first operational mode wherein a single side mirror 61 is moved to a closed position during parking and a second operational mode wherein both side mirrors 61 are moved to closed positions when parking.

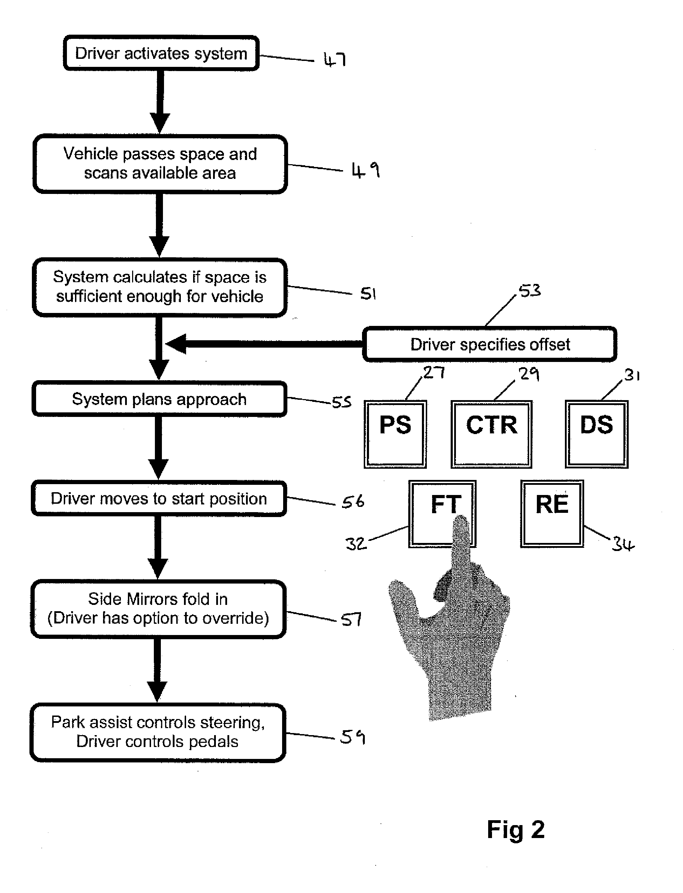

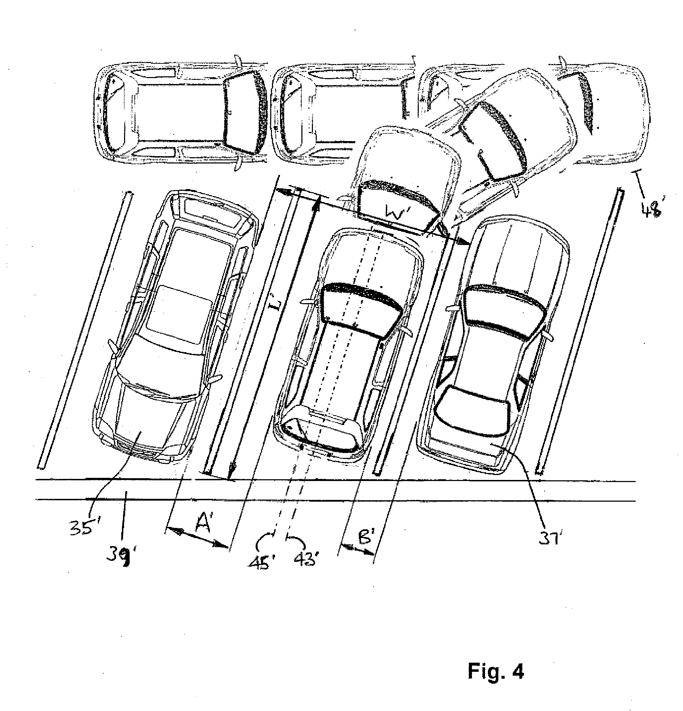

In use, a driver wanting to park the car 1 activates (step 47, Figure 2) the parking assistance by operating the switch 25, this causes the side sensors 11 to scan (step 49) the kerbside area for potential parking spaces. When the car 1 passes a potential parking space, the processing device 15 calculates (step 51) if there is sufficient space for the car 1 to park. If the processing device 15 determines that sufficient space is available, it indicates this to the driver via the interface 7, for example via the speaker 23 and/or display 21. The interface indicates to the driver if the parking manoeuvre is a standard reverse parking manoeuvre (see Figure 3), an angled parking manoeuvre (Figure 4), or a parallel parking manoeuvre (Figure 6). The driver specifies (step 53) the required position within the parking space by operating at least one of offset parking switches 27, 31, 32, 34, or the central parking position switch 29. The processing device 15 determines the pathway (step 55) along which the car 1 needs to move in order to position the vehicle within the parking space according to the position selection made by the driver. The driver stops (step 56) the car and selects reverse (this can be done before or after the user selects the offset function). The processing device 15 sends control signals (step 59) to the steering device 3 to steer the car into the offset position selected by the driver. The driver controls the accelerator and brake during the parking manoeuvre. Optionally, the processing device 15 controls the side mirrors to fold at least one of them (step 57) inwards, to prevent collisions with the adjacent vehicles 35, 37.

Figure 4 shows a reversing manoeuvre identical to that in Figure 3, except that the parking space is angled to the kerb 39', rather than perpendicular thereto. As the numerals in Figure 4 all have the same meaning as in Figure 3, they are repeated with apostrophes.

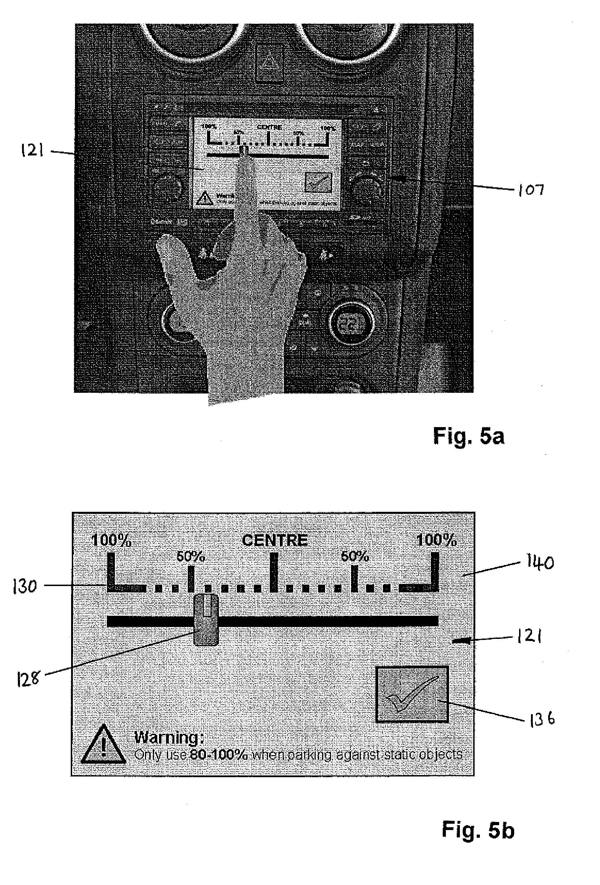

Figure 5a shows an alternative user interface 107. The alternative user interface 107 includes a touch sensitive screen 121 that is arranged to display information to the user about the parking system, including parking instructions and status information, and a speaker, for example for providing audible instructions. The touch sensitive screen 121 enables the user to make offset selections by touching appropriate parts of the screen 121. For example, the touch sensitive screen 121 can provide the offset selection buttons 25, 27, 29, 31, 32, 34 as icons on the screen 121. Additionally, or alternatively, the interface 107 can provide the user with a first interactive display 140 that enables the user to select the extent of lateral offset required (see Figure 5b). For example, the user can input the extent of lateral offset positioning required by sliding a movable pointer 128 along a scale 130 between minimum and maximum offset positions. The pointer 128 can be arranged to move continuously along the scale or to make discrete steps, for example increasing or decreasing offset positioning by 10% steps. An "accept" icon 136 is provided on the screen so that the user can confirm the pointer 128 position as the required offset position. Preferably the screen 121 displays a warning message that indicates that the last 20% of the offset scale should only be used against static objects such as walls, fences, etc. This enables the drivers of the adjacent vehicles 35, 37 to access their vehicles.

The interface 107 also provides the user with a second interactive display 142 for selecting the extent of the longitudinal offset required (see Figure 7). The second interactive display 142 is similarly arranged to the first interactive display 140, in that it includes a scale 132, a pointer 134 and an accept button 136, and enables the user to slide the pointer 134 along the scale to select the extent to which the vehicle is longitudinally offset with respect to the lateral mid-line of the parking space.

While the interactive displays 140, 142 have been shown as separate screen shots, it will be apparent to the skilled person that both of the scales 130,132 and pointers 128,134 can be displayed simultaneously to enable the user to make lateral and longitudinal offset inputs via a single screen.

In a first configuration, the interface 7;107 is arranged such that the user is only permitted to select lateral offset positions when a standard reversing manoeuvre is performed (see Figure 3) and longitudinal offset positions when a parallel parking manoeuvre is performed (see Figure 6). In a second configuration, the interface 7;107 is arranged such that one of the lateral offset positions or one of the longitudinal offset positions can be selected for standard reverse and parallel parking manoeuvres. In a third configuration, the interface 7;107 is arranged such that for at least one of standard reversing and parallel parking manoeuvres, and preferably both types of manoeuvre, the user is able to select a lateral offset position and a longitudinal offset position. For example, by setting the lateral offset position such that the driver side is closer to the longitudinal mid-line of the parking space 45 and the longitudinal offset position such that the rear bumper is closer to the lateral mid-line of the parking space, the user can provide additional space for accessing both the driver side and the boot of the vehicle.

The interface 107 also offers the user the option of setting a default offset position. For example, if the user frequently requires the car 1 to be positioned in the passenger side offset position, the processing device 15 will automatically use the default setting in order to position the vehicle such that the passenger side is closest to an adjacent vehicle - unless another selection is made for a particular parking manoeuvre.

It will be appreciated by the skilled person that variants to the above embodiment can be made but still fall within the scope of the invention. For example, the ultrasonic side sensors 11 can be replaced with a different type of sensor. For example, the side sensors 11 can be replaced with cameras and the processing device 15 can be arranged to interpret pictures received from the cameras in order to determine the size, shape and orientation of the parking space.

At least some of the sensors 9, 11, 13 can be infrared sensors, radar sensors or optical sensors.

The parking assistance apparatus can be arranged to control the speed of the car 1 during a parking manoeuvre.

The interface 7 can include at least one slide device that is arranged to enable a user to input the extent to which the car is offset from an axis. For example, the slide device can include a setting member that can be moved along a scale, wherein the positions on the scale represent the extent to which the vehicle is offset within the parking space. This is an electro-mechanical version of the scale displayed by the touch sensitive screen 121 in the alternative interface 107. The interface 7 can include a first slide device for lateral offset positions and a second slide device for longitudinal offset positions.

The interface 7;107 can include +ve and -ve buttons to enable the user to increase and decrease the offset position. These buttons can be provided as graphics on the touch sensitive screen 121.

The interface 7;107 can include at least one dial for selecting the extent to which the vehicle is offset from a central position. The dial includes a zero position, which represents a central position in the parking space. Rotating the dial clockwise from the central position increases the offset positioning in a first direction, for example the driver side, and rotating the dial anti-clockwise from the zero position increases the offset positioning in a second direction that is opposite to the first direction, for example the passenger side. Another dial can be included for the forward and reverse offset positions.

The interface can be arranged to enable a user to type in a value for the extent of offset positioning required; to select between high, medium and low preset offset positions; and/or to make inputs via a menu driven system on the screen 121.

## Claims

1. A parking assistance apparatus (5) for a vehicle (1), said apparatus including processing means (15) that is arranged to:
determine the size of a parking space according to inputs received from sensing means (11);
determine a pathway along which the vehicle (1) is to be moved in order to position the vehicle (1) within the parking space such that the vehicle (1) is laterally and / or longitudinally offset within the parking space;
and to generate control signals for a vehicle steering device (3) to guide the vehicle (1) along the pathway to the offset position;
and further including a user interface (7; 107; 121; 142) having input means (27, 29, 31, 32, 34; 128; 134, 136) enabling a user to make offset position selections;
**characterized in that**:
the input means (27, 29, 31, 32, 34; 128; 134, 136) enables the user to input a value that represents the extent to which the vehicle (1) is offset from a central longitudinal axis (45) of the parking space and / or a central lateral axis (46) of the parking space.

2. Apparatus (5) according to claim 1, wherein the value that represents the extent to which the vehicle (1) is offset from the central longitudinal axis (45) of the parking space and / or the central lateral axis (46) of the parking space is expressed as a percentage of the available offset, from alignment with a central axis (45, 46) of the parking space to maximum available offset.

3. Apparatus (5) according to claim 2, wherein alignment with a central axis (45, 46) is expressed as zero percent, and maximum available offset is expressed as plus one hundred percent in one direction, and minus one hundred percent in an opposite direction.

4. Apparatus (5) according to claim 2 or claim 3, wherein the user interface input means (27, 29, 31, 32, 34; 128; 134, 136) is arranged to adjust offset in discrete steps of at least ten per cent.

5. Apparatus (5) according to any one of claims 2 to 4, wherein the processing means (15) stores, and/or displays through the user interface (7; 107; 121; 142), a rule that an offset within a specified range should only be used when parking the vehicle (1) against static objects.

6. Apparatus (5) according to claim 5, wherein the specified range is plus or minus 80 to 100 percent.

7. Apparatus (5) according to any preceding claim, wherein the input means includes at least one of a touch sensitive screen (121, 142) and a sliding device (128, 134).

8. Apparatus (5) according to any preceding claim, wherein the processing means (15) comprises a memory, and said user interface input means (27, 29, 31, 32, 34; 128; 134, 136) is arranged to store at least one predetermined offset position in said memory;
and wherein said processing means (15) is programmed to position the vehicle (1) at a predetermined offset position which is retrieved from said memory.

9. Apparatus (5) according to any preceding claim, wherein the input means (27, 29, 31, 32, 34; 128; 134, 136) enables the user to set a default operating mode.

10. Apparatus (5) according to claim 8 or claim 9, wherein at least one said predetermined offset position or default operating mode is a personalized offset position or default operating mode stored in said memory.

11. Apparatus (5) according to any one of the preceding claims, wherein the processing means (15) is arranged to control operation of the steering device (3) to select one of the following parking manoeuvres: parallel parking; reverse parking such that the vehicle (1) is substantially perpendicular to the road (48), and reverse parking such that the vehicle (1) is angled to the road (48).

12. A method for parking a vehicle (1), including providing processing means (15), using the processing means to determine the size of a parking space according to readings obtained from sensing means (11); using the processing means (15) to determine a pathway along which the vehicle (1) is to be moved in order to position the vehicle (1) within the parking space in a position such that a central longitudinal axis (43) of the vehicle (1) is laterally offset from a central longitudinal axis (45) of the parking space and / or a central lateral axis (44) of the vehicle (1) is longitudinally offset from a central lateral axis (46) of the parking space; and using the processing means (15) to control operation of a steering device (3) to manoeuvre the vehicle (1) along the pathway to the longitudinally and / or laterally offset position;
wherein a user interface (7; 107; 121; 142) is provided for the processing means (15), said interface having input means (27, 29, 31, 32, 34; 128; 134, 136) that is arranged to enable a user to make offset position selections;
**characterized in that**:
the input means (27, 29, 31, 32, 34; 128; 134, 136) enables the user to select the extent to which the central longitudinal axis (43) of the vehicle (1) is laterally offset from the central longitudinal axis (45) of the parking space and / or the central lateral axis (44) of the vehicle (1) is longitudinally offset from the central lateral axis (46) of the parking space.

13. A method according to claim 12, wherein the processing means (15) is programmed to position the vehicle (1) at a predetermined offset position.

14. A vehicle (1) including apparatus (5) according to any one of claims 1 to 11, or arranged to perform a method according to claim 12 or claim 13.

15. A vehicle (1) according to claim 14, including pivotable side mirrors (61) and driving means arranged to move the pivotable side mirrors (61) from an open position to a closed position, wherein the processing means is arranged to operate the driving means to automatically move at least one of the side mirrors (61) to a closed position when performing the parking manoeuvre.
